Europäisches Patentamt

European Patent Office

Office européen des brevets

(19)

(11) Veröffentlichungsnummer: **0 207 259 B2**

# (12) NEUE EUROPÄISCHE PATENTSCHRIFT

(45) Veröffentlichungstag der neuen Patentschrift:
11.09.91 Patentblatt 91/37

(51) Int. Cl.⁵: **F01D 5/02, B23P 15/00,**
**B23K 9/04, F01D 5/30**

(21) Anmeldenummer: 86106371.7

(22) Anmeldetag: 09.05.86

(54) Verfahren zur Befestigung von Schaufeln auf dem Umfang des Rotorkörpers einer Dampfturbine.

(30) Priorität: 18.06.85 DE 3521664

(43) Veröffentlichungstag der Anmeldung:
07.01.87 Patentblatt 87/02

(45) Bekanntmachung des Hinweises auf die
Patenterteilung:
14.09.88 Patentblatt 88/37

(45) Bekanntmachung des Hinweises auf die
Entscheidung über den Einspruch:
11.09.91 Patentblatt 91/37

(84) Benannte Vertragsstaaten:
CH DE FR LI SE

(56) Entgegenhaltungen:
EP-A- 0 049 899
BE-A- 481 133
DE-A- 2 004 468
DE-A- 2 320 186
DE-A- 3 137 029
DE-A- 3 212 185
DE-B- 2 364 495
DE-C- 897 709

(56) Entgegenhaltungen:
SCHWEISSEN UND SCHNEIDEN, Jahrgang 23,
Heft 3, März 1976, Seiten 101-103, Düsseldorf,
DE; H. KAYSER: "Instandsetzen des Hauptturbinenläufers für das Handelsschiff "Otto
Hahn" durch Flammspritzen"
"Hütte, Taschenbuch für Eisenhüttenleute",
herausgegeben vom Akademischen Verein
Hütte, e.V. in Berlin, 5. neubearbeitete Auflage
(Berlin 1961) Verlag von Wilhelm Ernst&
Sohn,insb. Seiten 1253 und 1254
"Schwere korrosionssichere Turbinenbau-
Schmiedebaustücke für Kernkraftwerke" von
Dipl.-Phys. Paul Opel et al. in "Convegno Internazionale della Fucinatura 1970", Mai 1970
"Erfahrungen mit Schweissreparaturen an
Niederdruck-Dampfturbinenläufern", Der Maschinenschaden 59 (1986) Heft 5, Seiten
2o2-207

(73) Patentinhaber: BBC Brown Boveri AG
Haselstrasse
CH-5401 Baden (CH)

(72) Erfinder: Faber, Guy
Buacherstrasse 11
CH-5452 Oberrohrdorf (CH)
Erfinder: Kuhnen, Gottfried
Zelgli 28
CH-5452 Oberrohrdorf (CH)

EP 0 207 259 B2

## Beschreibung

Die Erfindung geht aus von einem Verfahren zur Befestigung von Schaufeln auf dem Umfang des Rotorkörpers einer Dampfturbine nach der Gattung des Oberbegriffs des Anspruchs 1.

Dampfturbinen besitzen im allgemeinen einen Rotor, welcher als Hohlkörper (Trommelrotor), als Vollkörper (Monoblock) oder als Körper aus einzelnen, miteinander verschweissten Scheiben (Körper gleicher Festigkeit) ausgeführt ist. Dieser Rotorkörper trägt dann auf seinem Umfang die Schaufeln, welche meistens mechanisch festgeklemmt oder auf irgend eine Weise verkeilt sind. Da die mechanischen und thermischen Anforderungen an die verschiedenen Teile verschieden sind, werden sie meist aus unterschiedlichen Werkstoffen ausgeführt. Dabei erweisen sich insbesondere die Einspannstellen an der Rotoroberfläche kritisch. Hier wird je nach Örtlichkeit entweder hohe (Warm-) Festigkeit, hohe Korrosionsfestigkeit und/oder Spannungskorrosionsbeständigkeit gefordert. Herkömmliche Rotorkörper bestehen — unabhängig von ihrem oben skizzierten geometrischen Aufbau — in der Regel aus einem einzigen, in den meisten Fällen durchvergüteten Werkstoff. Dazu werden allgemein niedrig bis mittel legierte Stähle benutzt. Die im Betrieb auftretenden mechanischen, thermischen und chemischen Belastungen würden indessen eine Abstufung der Werkstoffeigenschaften, insbesondere in radialer Richtung, als sehr wünschenswert erscheinen lassen.

Es ist schon vorgeschlagen worden, Turbinenrotoren ganz oder teilweise aus Schweissgut herzustellen, wobei auf einem vergleichsweise dünnen Rotationskörper spiralförmige Lagen durch Auftragschweissung aufgebracht werden: "Aufbauschweissung" (Vergl. DE-B-2 320 186). Bekannt sind ferner schützende Oberflächen, welche durch Auftragschweissen hergestellt werden (siehe z. B. EP-A-0 114 893).

In einer in Maschinenschaden 59 (1986) Heft 5, Seiten 202 bis 207 nachveröffentlichten überarbeiteten Fassung eines auf dem 47. Jahrestreffen der amerikanischen Energiekonferenz am 22. bis 24. April 1989 in Chicago von Dr.R.Amos et al. gehaltenen Vortrages über "Erfahrungen mit Schweissreparaturen an Niederdruck-Dampfturbinenläufern" ist in Bild 2 ein zweiflutiger Niederdruckrotor dargestellt. Bei diesem Rotor wurden an beiden Seiten rundum rissgeschädigte Nuten der vorletzten Laufreihen durch WIG-Schweissen wiederhergestellt. Als Werkstoffe wurden hierbei Schmiedelegierungen auf der Basis Ni-Mo-V und Ni-Cr-Mo-V verwendet. Solche Legierungen entsprechen zwar der anzuwendenden Spezifikationen der ASTM für Niederdruck-Läufer- und -Scheiben, weisen aber bei hoher mechanischer Belastung keinen besonders grossen Widerstand gegen Spannungskorrosion im kondensierenden Dampf auf.

Der Erfindung liegt die Aufgabe zugrunde, ein Verfahren zur Befestigung von Schaufeln auf dem Umfang eines Rotorkörpers anzugeben, welches die für die verschiedenen Stellen entsprechend unterschiedlichen Beanspruchungen optimale Ausnutzung der Eigenschaften der verwendeten Werkstoffe gewährleistet und sich sowohl für Neuherstellung wie für Reparaturen an bestehenden Rotoren gleichermassen eignet. Das Verfahren soll einfach, wenig aufwendig und kostensparend sein.

Diese Aufgabe wird durch die im kennzeichnenden Teil des Anspruchs 1 angegebenen Merkmale gelöst.

Die Erfindung wird anhand der nachfolgenden, durch Figuren näher erläuterten Ausführungsbeispiele beschrieben.

Dabei zeigt:

Fig. 1 den schematischen Längsschnitt durch einen Hochdruck-Rotor mit auftraggeschweisstem Ring an einem Ende,

Fig. 2 den schematischen Längsschnitt durch einen Niederdruck-Rotor mit auftraggeschweissten mantelförmigen Teilen auf der Seite des grösseren Durchmessers.

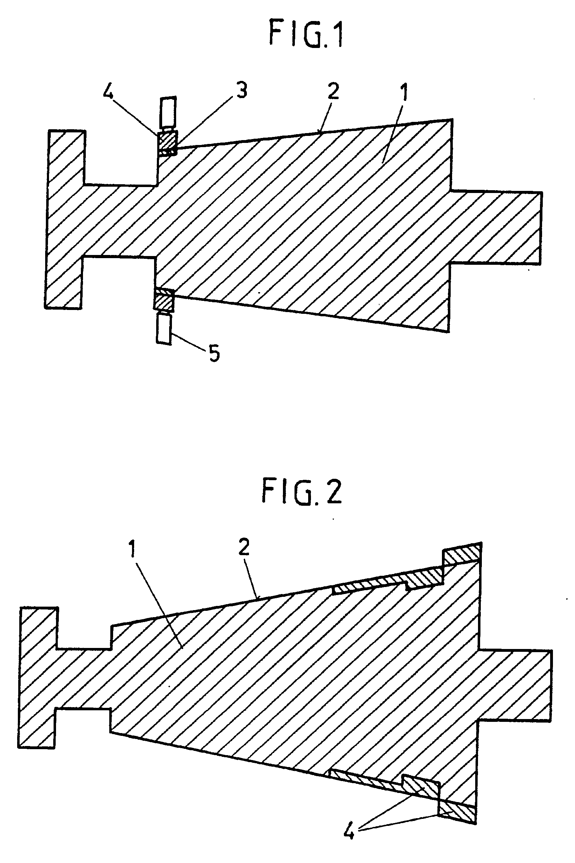

In Fig. 1 ist der Längsschnitt durch einen Hochdruck-Rotor einer Dampfturbine mit aufgeschweisstem Ring am Ende des geringeren Durchmessers dargestellt. 1 ist der aus einem niedriglegierten Stahl bestehende Rotorkörper. 2 stellt die Mantelfläche des Rotorkörpers 1 dar. 3 ist eine Zwischenschicht aus Schweissgut, welche durch Auftragschweissung hergestellt ist. 4 ist die aussenliegende, ebenfalls durch Auftragschweissung hergestellte Schicht aus Schweissgut, welche die Schaufeln 5 trägt. Die Schicht 4 besteht aus einem höher legierten Cr-Stahl mit gegebenenfalls weiteren Legierungselementen. Die Zwischenschicht 3 ist so gewählt, dass ihre Zusammensetzung zwischen derjenigen des Rotorkörpers 1 und derjenigen der aussenliegenden Schicht 4 liegt.

Fig. 2 zeigt schematisch einen Längsschnitt durch einen Niederdruck-Rotor einer Dampfturbine mit auftraggeschweissten mantelförmigen Teilen auf der Seite des grösseren Durchmessers. Der Rotorkörper 1 ist auf einem Teil seiner Mantelfläche mit einer abgesetzten, aussenliegenden Schicht 4 aus Schweissgut (Auftragschweissung) bedeckt. In diesem Fall fehlt die Zwischenschicht 3 der Fig. 1.

*Ausführungsbeispiel I*

Siehe Fig. 1!

Am Ende des kleineren Durchmessers eines Rotorkörpers 1, für eine Hochdruck-Dampfturbine, gegenüber dem Kupplungsflansch, wurde eine Auftragschweissung (Aufbauschweissung) in Form eines Ringes durchgeführt. Der Rotorkörper 1 hatte folgende Zusammensetzung:

C = 0,23%
Si = 0,12%
Mn = 0,64%
Cr = 1,6 %
Mo = 1,1 %
V = 0,28%
Fe = Rest

Nach der Vergütung zeigte der Rotorkörper 1 die nachfolgenden Festigkeitswerte:

Streckgrenze = 662 MPa
Zugfestigkeit = 810 MPa
Bruchdehnung = 18,5%
Kerbschlagarbeit = 43-65 Joule
(ISO V)

Die Abmessungen des Rotorkörpers 1 betrugen (über den Ballen gemessen):

Ballenlänge = 3500 mm
Grösster Ballendurchmesser = 1200 mm
Kleinster Ballendurchmesser = 800 mm

Der Rotorkörper 1 wurde auf einer Temperatur von 250°C vorgewärmt. Auf der Seite des kleinsten Ballendurchmessers des Rotorkörpers 1 wurde auf dessen durch eine entsprechende Eindrehung abgesetzten Mantelfläche 2 eine Zwischenschicht 3 von ca. 60 mm axialer Länge und ca. 8 mm radialer Dicke durch Auftragsschweissung von 3 Lagen aufgebracht. Die Zwischenschicht 3 hatte folgende Zusammensetzung:

C = 0,19%
Cr = 5,1 %
Mo = 1,2 %
V = 0,52%
Fe = Rest

Die Zwischenschicht 3 wurde auf einer Temperatur von 200°C gehalten und darauf eine aussenliegende Schicht 4 durch Auftragschweissung aufgebracht. Diese ringförmige Schicht 4 hatte ca. 60 mm axiale Länge und ca. 50 mm radiale Höhe (Dicke) und wies folgende Zusammensetzung auf:

C = 0,19%
Cr = 12,1 %
Mo = 1,2 %
V = 0,35%
Fe = Rest

Nach der Auftragschweissung der äusseren Schicht 4 wurde der ganze Rotorkörper 1 auf eine Temperatur von 100°C abgekühlt und dann sofort bei 680°C angelassen. Das Anlassen dient dazu, die Schweiss-Spannungen gezielt, wenigstens teilweise abzubauen und ein günstiges Gefüge erhöhter Zähigkeit zu erzeugen. Nach dem Abkühlen wurde der Rotorkörper 1 inkl. aufgeschweisste Schicht 4 durch mechanische Bearbeitung mit den üblichen Befestigungsnuten für die Schaufeln 5 versehen und die letzteren sukzessive eingesetzt. Die Prüfung ergab, dass das Schweissgut der Schicht 4 eine höhere Warmfestigkeit als der Grundwerkstoff des Rotorkörpers 1 aufwies und dass eine rissfreie Verbindung erzielt werden konnte.

*Ausführungsbeispiel II*

Siehe Fig. 2!

Ein Rotorkörper 1 einer Niederdruck-Dampfturbine wurde am dickeren Teil seiner Mantelfläche 2 mit einer Auftragschweissung versehen. Der Rotorkörper hatte folgende Zusammensetzung:

C = 0,25%
Si = 0,18%
Mn = 0,58%
Cr = 1,5 %
Ni = 2,9 %
Mo = 0,41 %

Dieser Werkstoff kann bei Vorhandensein von kritischen Mengen von Verunreinigungen ($CO_2$; NaOH etc.) im Dampf in der Zone der Erstkondensation anfällig auf Spannungskorrosion sein.

Nach der Vergütung zeigte der Rotorkörper 1 folgende Festigkeitswerte:

Streckgrenze = 820 MPa
Zugfestigkeit = 945 MPa
Bruchdehnung = 17,5%
Kerbschlagarbeit = 75-85 Joule
(ISO V)

Die Abmessungen des Rotorkörpers betrugen (über den Ballen gemessen):

Ballenlänge = 4200 mm
Grösster Ballendurchmesser = 2600 mm
Kleinster Ballendurchmesser = 1000 mm

Der Rotorkörper 1 wurde auf eine Temperatur von 300°C vorgewärmt. Auf der Seite des grossen Ballendurchmessers des Rotorkörpers 1 wurde auf dessen teilweise durch Eindrehungen abgesetzten Mantelfläche 2 eine aussenliegende abgestufte Schicht 4 durch Auftragschweissung aufgebracht. Die einzelnen Stufen der Schicht 4 hatten unterschiedliche axiale Länge und radiale Dicke, wobei Lage und Abmessungen durch die in der Zone der Erstkondensation zu erwartenden Spannungskorrosionsanfälligkeit bestimmt waren. Die radiale Dicke der Schicht 4 schwankte zwischen 80 und 200 mm. Es wurde keine Zwischenschicht 3 (vergl. Fig. 1 ) aufgetragen. Die aussenliegende Schicht 4 hatte die nachfolgende Zusammensetzung:

C = 0,2%
Cr = 12,8%
Mo = 1,2%
Fe = Rest

Nach der Auftragschweissung wurde der ganze Rotorkörper 1 inkl. Schicht 4 auf eine Temperatur von 120°C abgekühlt und sofort bei 630°C angelassen. Die weiteren Verfahrensschritte erfolgten analog denjenigen unter Beispiel I. Die im Falle von Beispiel I erforderliche Zwischenschicht 3 (vergl. Fig. 1 ) kann in der Regel weggelassen werden, da die Dampftemperaturen in diesem Teil der Maschine 200°C nicht überschreiten. Will man trotzdem nicht auf eine Zwischenschicht 3 verzichten, empfiehlt sich ein Stahl mit ca. 4% Cr-Gehalt.

Die Erfindung ist nicht auf die Ausführungsbeispiele beschränkt. Die Vorwärmung des Rotorkörpers 1 vor dem Auftragschweissen kann im Falle von Hochdruck-Rotoren vorzugsweise auf 200-300°C, im Falle von Niederdruckrotoren auf 250-350°C erfolgen. Die entsprechenden Temperaturen für die Zwischenschicht 3 betragen vorzugsweise 150-300°C, bzw. 200-350°C. Das Abkühlen nach dem Schweissen soll auf ca. 100- 120°C erfolgen. Die abschliessende Wärmebehandlung (Anlassen) kann allgemein vorzugsweise im Temperaturbereich von 600 bis 750°C während 1 bis 10 h erfolgen.

Für die aussenliegende Schicht 4 kommt als Schweissgut grundsätzlich ein Stahl folgender Zusammensetzung in Frage:

C = 0,06 - 0,26%
Cr = 10 -14 %
Mo = 0 - 2 %
V = 0 - 0,45%
Fe = Rest

Bevorzugte Zusammensetzungen für Schicht 4 sind solche mit:

C = 0,17-0,24%
Cr = 12%
Mo = 1%
Fe = Rest

mit oder ohne zusätzlichen 0,3%V.

Für die Zwischenschicht 3 kann grundsätzlich Schweissgut der folgenden Zusammensetzung verwendet werden:

C = 0,1 - 0,26%
Cr = 2 -6 %
Mo = 0 - 2 %
V = 0 - 0,65%
Fe = Rest

Bevorzugte Zusammensetzungen für Zwischenschicht 3 sind solche mit:

```
C  = 0,15 - 0,2%
Cr = 4     - 6  %
Mo = 1,%
Fe = Rest
```

mit oder ohne zusätzlichen 0,5%V.

Die Vorteile der neuen Schaufelbefestigung im Schweissgut (auf den Grundkörper des Rotors auftraggeschweisste Rotationskörper) liegen in der Möglichkeit der optimalen Werkstoffauswahl für den jeweils auftretenden, örtlich variierenden Belastungsfall. Auf diese Weise kann sowohl den Verhältnissen bei Hochdruckwie bei Niederdruck-Rädern bestmöglich Rechnung getragen werden.

## Patentansprüche

1. Verfahren zur Befestigung von Schaufeln (5) auf dem Umfang des Rotorkörpers (1) einer Dampfturbine durch Festklemmen und Verkeilen in Vertiefungen und/oder Erhebungen des Rotorkörpers (1), bei dem die Mantelfläche (2) des Rotorkörpers (1) teilweise von mindestens einer, je aus mindestens einer auftraggeschweissten Lage eines Stahls bestehenden Schicht (3, 4) von Ringform gebildet wird, der durch Auftragschweissung in Ringform gebildete Teil des Rotorkörpers (1) einer mechanischen Bearbeitung durch Drehen, Fräsen und Schleifen zwecks Formgebung zur Aufnahme der Schaufeln (5) unterworfen wird, und die letzteren in diesen aus Schweissgut bestehenden Teil des Rotorkörpers (1) eingesetzt werden, dadurch gekennzeichnet, dass bei der Auftragschweissung als aufzutragendes Schweissgut ein warmfester oder korrosionsbeständiger und/oder spannungskorrosionsbeständiger Stahl verwendet wird, und dass hierbei das aufgetragene Schweissgut in seiner chemischen und metallurgischen Zusammensetzung sowie seinen physikalischen Eigenschaften in radialer und/oder axialer Richtung stufenweise oder kontinuierlich den örtlich variierenden mechanischen, thermischen und chemischen Beanspruchungen des Rotorkörpers (1) angepasst wird, indem zumindest in einer aussenliegenden Schicht (4) des durch Auftragschweissen gebildeten Teils des Rotorkörpers (1) ein Stahl folgender Zusammensetzung verwendet wird:

$$
\begin{aligned}
C  &= \quad 0,06 - 0,26 \ \% \\
Cr &= \quad\quad 10 - 14 \quad \% \\
Mo &= \quad\quad 0 - 2 \quad\quad \% \\
V  &= \quad\quad 0 - 0,45 \ \% \\
Fe &= \quad Rest
\end{aligned}
$$

2. Verfahren nach Anspruch 1, dadurch gekennzeichnet, dass mindestens der durch Auftragschweissung in Form von Schichten (3, 4) gebildete Teil des Rotorkörpers (1) vor dem Einsetzen der Schaufeln (5) einer Wärmebehandlung im Temperaturbereich von 600 bis 750°C während 1 bis 10h unterworfen wird.

3. Verfahren nach Anspruch 1, dadurch gekennzeichnet, dass als aufzutragendes Schweissgut für eine aussenliegende Schicht (4) ein Stahl mit der nachfolgenden Zusammensetzung verwendet wird:

```
C  = 0,17 - 0,24%
Cr = 12%
Mo = 1%
Fe = Rest.
```

4. Verfahren nach Anspruch 1, dadurch gekennzeichnet, dass als aufzutragendes Schweissgut für eine aussenliegende Schicht (4) ein Stahl mit der nachfolgenden Zusammensetzung verwendet wird:

```
C   =   0,17 - 0,24%
Cr  =  12  %
Mo  =   1  %
V   =   0,3%
Fe  =  Rest.
```

5. Verfahren nach Anspruch 1, dadurch gekennzeichnet, dass auf den Rotorkörper (1) zunächst eine Zwischenschicht (3) aufgebracht wird, deren Zusammensetzung im wesentlichen zwischen derjenigen des Rotorkörpers (1) und derjenigen der aussenliegenden Schicht (4) liegt, und dass auf diese Zwischenschicht (3) eine weitere, aussenliegende Schicht (4) aufgebracht wird.

6. Verfahren nach Anspruch 5, dadurch gekennzeichnet, dass als aufzuragendes Schweissgut für die Zwischenschicht (3) ein Stahl mit der nachfolgenden Zusammensetzung verwendet wird:

```
C   =  0,1 - 0,26%
Cr  =  2  - 6  %
Mo  =  0  - 2  %
V   =  0  - 0,65%
Fe  =  Rest.
```

7. Verfahren nach Anspruch 6, dadurch gekennzeichnet, dass als aufzutragendes Schweissgut für die Zwischenschicht (3) ein Stahl mit der nachfolgenden Zusammensetzung verwendet wird:

```
C   =  0,15 - 0,2%
Cr  =  4  - 6  %
Mo  =  1%
Fe  =  Rest.
```

8. Verfahren nach Anspruch 7, dadurch gekennzeichnet, dass als aufzutragendes Schweissgut für die Zwischenschicht (3) ein Stahl mit der nachfolgenden Zusammensetzung verwendet wird:

```
C   =  0,15 - 0,2%
Cr  =  4  - 6  %
Mo  =  1  %
V   =  0,5%
Fe  =  Rest.
```

## Claims

1. Method for fastening blades (5) on the periphery of the rotor body (1) of a steam turbine by clamping and wedging in depressions and/or protrusions of the rotor body (1), characterised in that the generated surface (2) of the rotor body (1) is partly formed by at least one annular-shaped layer (3, 4), each consisting of at least one built-up steel weld run, the part of the rotor body (1) formed in annular shape by build-up welding is subjected to machining by turning, milling and grinding with the purpose of providing shapes for accepting the blades (5), and the latter are inserted in this part of the rotor body (1) consisting of weld material, characterised in that, during the build-up welding, a hot-strength or corrosion resistant and/or stress-corrosion-resistant steel is used as the weld material be be applied, and in that in this connection the applied weld material is matched in its chemical and metallurgical composition and in its physical properties stepwise or continuously in the radial and/or axial direction to the locally varying mechanical and thermal loads and chemical attack on the rotor body (1) by a steel of the following composition being used at least in an external layer (4) of the part of the rotor body (1) formed by build-up welding:

```
C  = 0.06 - 0.26%
Cr = 10 - 14%
Mo =  0 - 2%
V  =  0 - 0.45%
Fe =  Rest
```

2. Method according to Claim 1, characterised in that at least the part of the rotor body (1) formed by build-up welding in the form of layers (3, 4) is subjected to heat treatment in the temperature range from 600 to 750°C for between 1 and 10 hours before the insertion of the blades (5).

3. Method according to Claim 1, characterised in that a steel with the following composition is used as the weld material to be applied as an external layer (4):

```
C  = 0.17 - 0.24%
Cr = 12%
Mo = 1%
Fe = Rest.
```

4. Method according to Claim 1, characterised in that a steel with the following composition is used as the weld material to be applied as an external layer (4):

```
C  = 0.17 - 0.24%
Cr = 12%
Mo = 1%
V  = 0.3%
Fe = Rest.
```

5. Method according to Claim 1, characterised in that an intermediate layer (3), whose composition lies essentially between that of the rotor body (1) and that of the external layer (4), is applied first to the rotor body and that a further, external layer (4) is applied onto this intermediate layer (3).

6. Method according to Claim 5, characterised in that a steel with the following composition is used as the weld material to be applied as the intermediate layer (3):

```
C  = 0.1 - 0.26%
Cr = 2 - 6%
Mo = 0 - 2%
V  = 0 - 0.65%
Fe = Rest.
```

7. Method according to Claim 5, characterised in that a steel with the following composition is used as the weld material to be applied as the intermediate layer (3):

```
C  = 0.15 - 0.2%
Cr = 4 - 6%
Mo = 1%
Fe = Rest.
```

8. Method according to Claim 5, characterised in that a steel with the following composition is used as the weld material to be applied as the intermediate layer (3):

7

EP 0 207 259 B2

```
C  = 0.15 - 0.2%
Cr = 4 - 6%
Mo = 1%
V  = 0.5%
Fe = Rest.
```

**Revendications**

1. Procédé pour fixer des aubes (5) sur la périphérie du corps de rotor (1) d'une turbine à vapeur par serrage et clavetage dans des cavités et/ou des saillies du corps de rotor (1), par lequel la surface latérale (2) du corps de rotor (1) est partiellement formée à partir d'au moins une couche (3,4) en couronne se composant chacune d'au moins une passe de soudure déposée par rechargement d'un acier, la partie du corps de rotor (1) formée en couronne par rechargement est soumise à un usinage mécanique par tournage, fraisage et rectification aux fins de façonnage pour la pose des aubes (5), et ces dernières sont posées dans cette partie du corps de rotor (1) constituée du métal d'apport, caractérisé en ce que, pour le rechargement, on utilise en guise de métal d'apport à déposer, un acier résistant à chaud ou résistant à la corrosion et/ou résistant à la corrosion sous contrainte, et qu'ainsi le métal d'apport déposé est adapté, dans sa composition chimique et métallurgique, ainsi que dans ses propriétés physiques, aux solicitations mécaniques, thermiques et chimiques du corps de rotor (1) qui varient localement par paliers ou en continu en direction radiale et/ou axiale, en utilisant au moins dans une couche extérieure (4) de la partie réalisée par rechargement du corps de rotor (1) un acier ayant la composition suivante:

```
C  -  0,06 - 0,26 %
Cr -  10 - 14 %
Mo -  0 - 2 %
V  -  0 - 0,45 %
Fe -  reste
```

2. Procédé suivant la revendication 1, caractérisé en ce qu'au moins la partie du corps de rotor (1) réalisée sous forme de couches (3, 4) par rechargement est soumise à un traitement thermique dans un domaine de températures de 600 à 750°C pendant 1 à 10 h avant la pose des aubes (5).

3. Procédé suivant la revendication 1, caractérisé en ce qu'en guise de métal d'apport à déposer pour une couche extérieure (4), on utilise un acier ayant la composition suivante :

```
C  =  0,17 - 0,24 %
Cr = 12 %
Mo =  1 %
Fe = reste.
```

4. Procédé suivant la revendication 1, caractérisé en ce qu'en guise de métal d'apport à déposer pour une couche extérieure (4), on utilise un acier ayant la composition suivante :

```
C  =  0,17 - 0,24 %
Cr = 12 %
Mo =  1 %
V  =  0,3 %
Fe = reste.
```

8

5. Procédé suivant la revendication 1, caractérisé en ce que sur le corps de rotor (1) on dépose d'abord une couche intermédiaire (3), dont la composition est essentiellement située entre celle du corps de rotor (1) et celle de la couche extérieure (4), et en ce que l'on dépose ensuite une autre couche, extérieure, (4), sur cette couche intermédiaire (3).

6. Procédé suivant la revendication 5, caractérisé en ce qu'en guise de métal d'apport à déposer pour une couche extérieure (3), on utilise un acier ayant la composition suivante :

```
C  = 0,1 - 0,26 %
Cr = 2   - 6    %
Mo = 0   - 2    %
V  = 0   - 0,65 %
Fe = reste.
```

7. Procédé suivant la revendication 5, caractérisé en ce qu'en guise de métal d'apport à déposer pour une couche extérieure (3), on utilise un acier ayant la composition suivante :

```
C  = 0,15 - 0,2 %
Cr = 4 - 6 %
Mo = 1 %
Fe = reste.
```

8. Procédé suivant la revendication 5, caractérisé en ce qu'en guise de métal d'apport à déposer pour une couche extérieure (3), on utilise un acier ayant la composition suivante :

```
C  = 0,15 - 0,2 %
Cr = 4 - 6 %
Mo = 1 %
V  = 0,5 %
Fe = reste.
```

# FIG.1

# FIG.2